# EUROPEAN PATENT SPECIFICATION

(11) **EP 1 631 438 B1**
(45) Date of publication and mention of the grant of the patent: **08.10.2008**
(21) Application number: 04731985.0
(22) Date of filing: 10.05.2004
(51) Int. Cl.: B29C 59/02, B29D 17/00, G11B 7/26

(54) **METHOD OF PRODUCING AN OPTICAL STRUCTURE ON A PLURALITY OF BODIES**
VERFAHREN ZUR HERSTELLUNG VON EINER OPTISCHEN ANORDNUNG AUF EINE MEHRZAL VON KÖRPERN
PROCEDE DE PRODUCTION D'UNE STRUCTURE OPTIQUE SUR UNE PLURALITE D'OBJETS

(30) Priority: 14.05.2003 EP 03101346
(43) Date of publication of application: 08.03.2006
(73) Proprietor: Koninklijke Philips Electronics N.V., 5621 BA Eindhoven (NL)
(72) Inventor: HENDRIKS, Robert, F., M., NL-5656 AA Eindhoven (NL); STALLINGA, Sjoerd, NL-5656 AA Eindhoven (NL); GOOSSENS, Hendrik, J., NL-5656 AA Eindhoven (NL); 'T HOOFT, Gert, W., NL-5656 AA Eindhoven (NL); VAN DER LEE, Alexander, M., NL-5656 AA Eindhoven (NL); SCHUURMANS, Frank, J., P., NL-5656 AA Eindhoven (NL); VULLERS, Rudolf, J., M., NL-5656 AA Eindhoven (NL); KURT, Ralph, NL-5656 AA Eindhoven (NL); HENDRIKS, Bernardus, H., W., NL-5656 AA Eindhoven (NL); BAKKER, Levinus, P., NL-5656 AA Eindhoven (NL)
(74) Representative: Uittenbogaard, Frank
(86) International application number: PCT/IB2004/050624
(87) International publication number: WO 2004/101258

(56) References cited:
- EP-A- 0 648 592
- WO-A-01/00410
- US-A- 4 787 837
- US-A- 5 451 257

## Description

The invention relates to a method of producing a substantially identical optical structure on a plurality of bodies, a body being an information carrier for containing user information or an item accompanying an information carrier, the optical structure being indicative of characteristic information, which can be derived from said optical structure for providing or restricting access to the user information.

Such a method is known from EP-A-0 989 553. In this method, the information carrier is an optical disk, and the characteristic information is recorded as mechanically embossed pits that are made on the disk constituting the body by means of a strong on/off-switched laser light to change the reflectivity of the disk by either changing the disk's composition or destroying the disk in a minute region thereof, and such a method cannot be used by the end user. According to said EP-A-0 989 553, the user information present on a disk is encrypted, and the encryption key can be derived from the characteristic information which is pre-recorded on the disk. A player for disks of this type is consequently adapted in order to identify said characteristic information present on a disk, to derive from it the encryption key, and to decrypt the user information recorded on the disk. A recorder attempting to clone an original disk, i.e. e. to duplicate the user information contained in an original disk on a second disk, will not be able to record onto the second disk also the characteristic information identical to the one present on the original disk, and necessary for decrypting the user-information. As a consequence, the user information contained in the second disk cannot be decrypted and played.

With the method described in said EP-A-0 989 553 it is still possible to clone disks by copying both the content and the characteristic information: in fact, although the equipment necessary for recording characteristic information on a disk is unlikely to be easily available to an end user, such an equipment is available to professional counterfeiters. It is a disadvantage of the known method that the products produced can be cloned when professional equipment is employed.

WO 01/00410 A1 discloses a method for processing a film. The method includes impressing the whole surface or a selected surface of the film to form protuberant structures on the film by using a transfer and an impresser which has grain projections formed thereon, wherein the protuberant structures have a protuberant shape with an opening whole on the tip or without an opening whole on the tip.

US 4,787,837 discloses a wear-resistant ceramic, cermet or metallic embossing surfaces, methods for producing same, methods for embossing articles by same and novel embossed articles.

US 5,451,257 discloses a porous film and porous film manufacturing apparatus.

EP 0 648 592 A2 discloses a porous film manufacturing apparatus.

It is an object of the invention to provide a method of the kind described in the opening paragraph, by which bodies are produced bearing optical structures, which are substantially impossible to be cloned, and which method nevertheless allows for the production of a plurality of bodies bearing substantially identical optical structures. This object is achieved by:
- producing a stamp by attaching particles to a surface of the stamp; and
- using the stamp to imprint said surface on an imprintable material, thereby producing an imprint of the stamp in at least a surface portion of the body, the imprint being the optical structure having a microstructure, that is different from microstructures produced by use of other stamps according to the method of claim 1.

The result of the method is a plurality of bodies, each body bearing an imprint of the stamp; the imprint is the optical structure indicative of characteristic information. An optical structure is a surface portion of a body which, if irradiated with a coherent beam of light, gives rise to reflection, refraction or diffraction of the light, or a combination of two or three thereof. With a screen positioned in an adequate position in respect of the light source and the optical structure, it is possible to observe on the screen a speckle pattern caused by the interaction of the light with the optical structure. The observed speckle pattern depends on the parameters defining the coherent beam of light such as for example, wavelength and phase, and on the internal microstructure of the optical structure, i.e. e. on the shape of the imprint. The speckle pattern can be sensed with a sensor and can be further processed in order to derive from it the characteristic information. In general, the characteristic information is any information necessary for accessing the user information. e. g. a decryption key for decrypting encrypted user information.

A player for an information carrier of the type referred to in the method of the invention will consequently be adapted to identify from the associated optical structure the characteristic information, and to use said characteristic information to access the user information present on the information carrier.

However, the information carrier referred to in the method of the invention does not need to actually contain user information, but it may also be an information carrier of a recordable type. A recorder for such a recordable information carrier will consequently be adapted to identify from the associated optical structure the characteristic information, to use said characteristic information to encode accordingly the user information to be recorded, and to record the encoded user information.

The use of a stamp guarantees the reproducibility: in fact, the producer or the owner of the stamp has the possibility to reproduce substantially equal optical structures a plurality of times. Reproducibility is an important requirement for industrial applicability, since characteristic information is to be derived from the optical structure. If the optical structure is not reproducible, every optical structure will be unique and two optical structures will indicate different characteristic information. Hence, if the characteristic information comprises an encryption/decryption key, the encryption/decryption key will also be different, and equally different would be the encrypted user-information: in this way every disk should be mastered individually, implying a complex, expensive, and impracticable mastering process.

The method of the invention, however, produces a plurality of bodies bearing substantially identical optical structures indicative of identical characteristic information.

What makes an optical structure substantially impossible to clone is the way the characteristic information is derived from it together with the way the optical structure is produced. The speckle pattern, and consequently the characteristic information, can be seen as the output of a physical One-Way Function (OWF), the inputs of which are the internal microstructure of the optical structure and the irradiating beam of light. An OWF is a function that is easy to evaluate in the forward sense but generally unfeasible to compute in the reverse direction, and whose output domain is very large and whose input domain is even much larger. An attempt to clone an optical structure could be based on its physical observation, or on its behavioral observation. An optical structure may in principle be observed with a noninvasive tomographic imaging technique, but equipment presently available does not allow for the microfabrication of the internal microstructure to the required level of detail. The possibility to deduce the internal microstructure of the optical structure, based on its behavior, i.e. speckle pattern and characteristic information as a response to a given irradiating beam, is ruled out by the properties of an OWF.

The possibility to produce an optical structure potentially different from the original one but having exactly the same behavior is also unfeasible, given the large number of possible values for the parameters defining the coherent beam of light and the computational complexity of reconstructing an optical structure having a known behavior.

Further detailed considerations on the properties of physical OWFs, and on the substantial impossibility of cloning an optical structure, or of reconstructing an optical structure with a known behavior, or even of fooling a system for access control of user information based on optical structure are presented in the article "Physical One-Way Functions" Ravikanth Pappu et al., Vol. 297 SCIENCE, 20/09/2002.

The method of the invention may be extended to comprise a further step of applying to the imprint of each body a layer of reflecting material such that the surface of the reflective material facing away from the imprint, substantially follows the imprint.

In this way a reflective layer is applied, the aim of which is to enhance the reflectivity of the optical structure. This implies that the screen which has to sense the speckle pattern has to be positioned facing the surface bearing the imprint: as a consequence, both the laser for irradiating the optical structure and the screen for sensing the speckle pattern will be positioned on the same side of the body.

The method of the invention may be extended to comprise the following further steps: applying over the imprint of the each body a layer of another, substantially transparent, imprintable material; using the stamp an additional time to imprint the layer of the other imprintable material, thereby making an additional imprint on the each body.

The application of the other imprintable material serves to prepare the body to receive an additional imprint. The layer of the other imprintable material may be applied over the layer of reflective material, if this is present, or directly over the surface or surface portion bearing the first imprint. The additional imprint is then produced with the same stamp on the layer of the other imprintable material, thereby obtaining a dual-layer optical structure, more complex than an optical structure with a single imprint, and thus even more difficult to clone. The layer of the other imprintable material needs to be substantially transparent, otherwise the first imprint will not adequately contribute to the interaction with light when irradiated.

The method of the invention may be extended to comprise the following further steps: producing an additional stamp by attaching particles to a surface of an additional auxiliary body; -applying over the imprint of the each body a layer of another, substantially transparent, imprintable material; using the additional stamp to imprint the layer of the other imprintable material, thereby making an additional imprint on the each body.

The application of the other imprintable material serves to prepare the body to receive an additional imprint. The layer of the other imprintable material may be applied over the layer of reflective material, if this is present, or directly over the surface or surface portion bearing the first imprint. The additional imprint is then produced with the additional stamp, which has been prepared for this purpose, on the layer of the other imprintable material, thereby obtaining a dual-layer optical structure, more complex than an optical structure with a single imprint, and thus even more difficult to clone. The layer of other imprintable material needs to be substantially transparent, otherwise the first imprint will not adequately contribute to the interaction with light when irradiated.

When an additional imprint is made, preferably the imprintable material used has a first refractive index, and the other imprintable material has a second refractive index, the second refractive index being different from the first refractive index.

This feature may be desirable when no interposition material is present between the first imprint and the layer of the other imprintable material, in order to make sure that the interface between the two adequately contributes to the interaction with light when irradiated.

In view of making an additional imprint, the method of the invention may be extended by interposing between the imprint and the layer of the other imprintable material of the each body a substantially transparent separation layer.

In fact, the application of the other imprintable material may be preceded by the application of a separation layer. This step may be desirable, for example, when the other imprintable material is not suitable for covering the first imprint and filling the recesses thereof. The separation layer needs to be substantially transparent, otherwise the first imprint will not adequately contribute to the interaction with light when irradiated. The presence of a separation layer allows the use of the same material as the imprintable material and the other imprintable material.

If the separation layer is present, preferably the imprintable material used has a first refractive index, and the separation layer has a third refractive index, the third refractive index being different from the first refractive index.

This feature may be desirable when no reflective layer is present between the first imprint and the separation layer, in order to make sure that the interface between the two adequately contributes to the interaction with light when irradiated.

In order to protect the optical structure, the method of the invention may be extended by applying on the imprint of the each body a substantially transparent covering layer.

The purpose is to protect the imprint from any mechanical alteration, for example caused by manipulation of the body, which may subsequently alter the optical structure as a whole. The covering layer needs to be substantially transparent. Moreover, if the covering layer is present, preferably the material used as the imprintable material has a first refractive index, and the covering layer has a fourth refractive index, the fourth refractive index being different from the first refractive index. If the optical structure is a double-layer or a multi-layer optical structure, the covering layer may be applied on the uppermost imprint.

According to another aspect of the method of the invention, the each body is a laminated body comprising a reflective layer.

The presence of a reflective layer serves to enhance the reflectivity of the optical structure and implies that the screen which has to sense the speckle pattern has to be positioned facing the surface bearing the imprint: as a consequence, both the laser for irradiating the optical structure and the screen for sensing the speckle pattern will be positioned on the same side of the body.

According to another aspect of the method of the invention, the each body is integral with the respective information carrier. In other words, the information carrier itself is used as the body for bearing the optical structure.

The optical structure is associated with a respective information carrier for containing user information. The information carrier may be, for example, an optical disk.

According to another aspect of the method of the invention, particles of diamond are used as the particles.

In order to make sure that the imprint can be reproduced substantially equally a large number of times, the particles used to produce the stamp and, occasionally, the additional stamp are preferably solid particles of a hard material such as, for example, diamond or tungsten carbide, so that repetitive usage of the stamp for the large number of times does not wear out the shape of the stamp.

According to another aspect of the method of the invention, particles having a size ranging between 100 nm and I µ m are used as the particles.

The use of particles in this size range is to ensure that diffractive effects resulting from the irradiation of the optical structure due to recesses in the imprint and in the additional imprint, if present, are adequately exploited for the formation of the speckle pattern.

The cited article "Physical One-Way Functions", proposes the use of inhomogeneous structures in a system for access control of user information contained in an information carrier, for example a credit card. The inhomogeneous structures are used to generate characteristic information that is checked against control information contained in the information carrier in order to authenticate the information carrier. Said article, however, fails to provide a method for the production of inhomogeneous structures, and in particular of substantially equal inhomogeneous structures, which problem is encountered when attempting to apply a similar system for access control, for example, to pre-recorded optical disks.

These and other aspects of the invention will be further elucidated and described with reference to the drawings.
Fig. 1 shows a cross-section of a stamp and a cross-section of a body bearing an imprint of the stamp,
Fig. 2 shows cross-sections of a body bearing an optical structure, across the optical structure, in different conditions,
Fig. 3 shows an additional stamp and cross-sections of a body bearing a dual-layer optical structure, across the optical structure, in different conditions,
Fig. 4 shows an optical disk bearing an optical structure in perspective and in cross-section, and
Fig. 5 shows a system for access control of user information contained in an optical disk, based on an optical structure indicative of characteristic information.

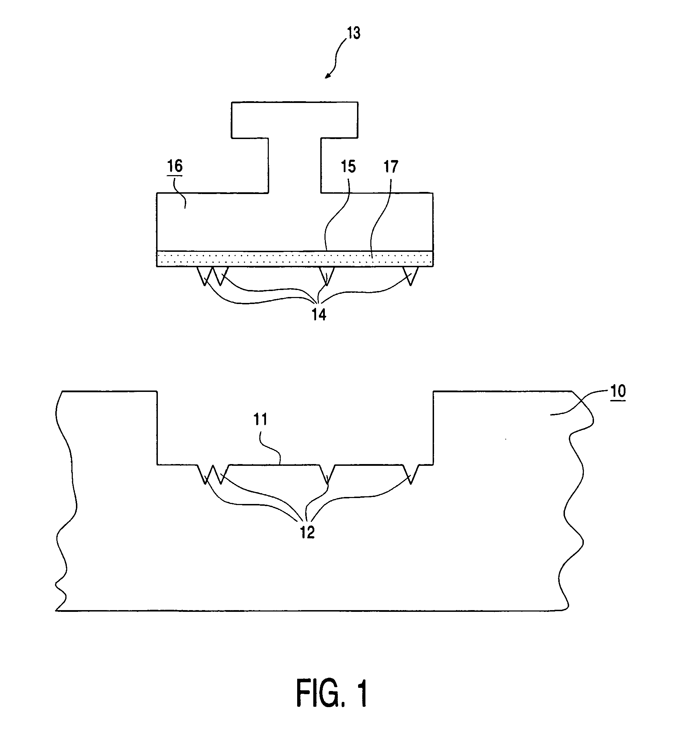

Fig. 1 shows a cross-section of a stamp and a cross-section of a body bearing an imprint of the stamp.

In the Figure it is possible to see a stamp 13, and in particular particles 14 attached to a surface 15 of an auxiliary body 16, a body 10 bearing an imprint 11 of the stamp 13, and in particular recesses 12 in the imprint 11 caused by the particles 14 attached to the auxiliary body 16. The imprint 11 of the stamp 13 is an optical structure.

According to the method of the invention, a plurality of bodies are produced, where each body 10 is associated with a respective information carrier for containing user information and is bearing a substantially identical optical structure indicative of characteristic information necessary for accessing the user information present in the respective information carrier.

In the first step, a stamp 13 is produced, by attaching particles 14 to a surface 15 of an auxiliary body 16.

The stamp 13 may be obtained, for example, by applying a gluing material 17 to the surface 15 of the auxiliary body 16, distributing some particles 14, for example randomly, over the surface 15, and solidifying the gluing material 17.

In order to make sure that the imprint can be reproduced substantially equally a large number of times, the used particles are preferably solid particles of a hard material such as, for example, tungsten carbide or diamond, so that repetitive usage of the stamp for the large number of times does not wear out the shape of the stamp. Preferably, the used particles have a size range of the same order of magnitude as the wavelength of the irradiated light, for example 100 nm-1 µm.

In the second step, the stamp 13 is used to imprint an imprintable material, thereby producing the plurality of bodies, each such body 10 having at least a surface portion bearing an imprint 11 of the stamp 13.

The second step may be accomplished, for example, by using the stamp on a plurality of existing bodies or blanks not having any imprint of the stamp yet, so as to produce an imprint on each of these existing bodies, for example by a molding process. The imprint thus produced on a surface portion is the optical structure. A plurality of optical structures produced with the same stamp are substantially identical, and thus indicative of the same characteristic information. As an alternative, the second step may be accomplished starting from a shapeless material, the body being formed at the same time when a surface portion thereof is shaped by the stamp.

If blanks, i.e. bodies not having any imprint of the stamp yet, are employed, the imprint may be produced on a surface portion of the blank that is imprintable: this may simply be, for example, the material of which the blank consists, or a surface portion thereof; alternatively, the surface portion of the blank that is imprintable may be obtained by applying an initial layer of imprintable material. Imprintable materials that can be used are, for example, polycarbonate, epoxy, and diacryl.

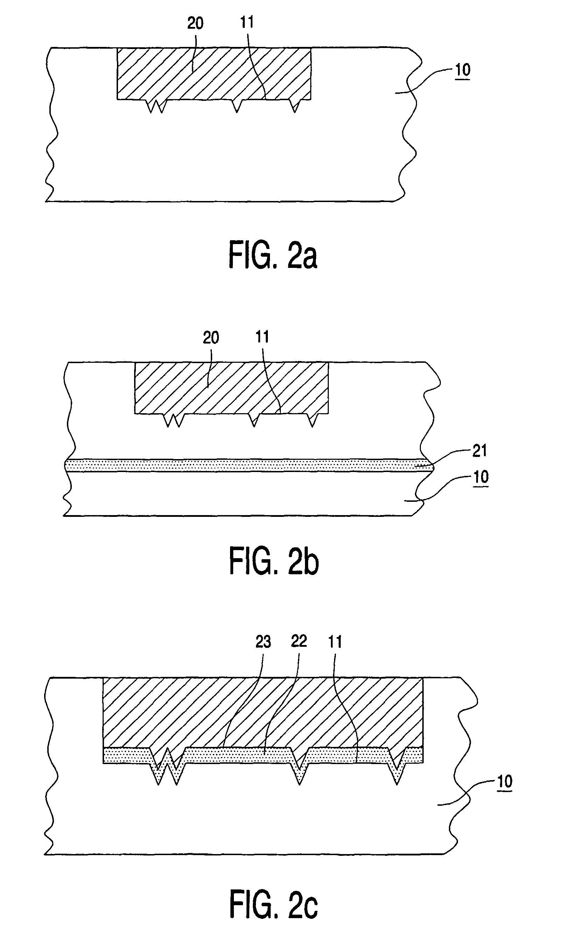

Fig. 2 shows cross-sections of a body bearing an optical structure, across the optical structure, in different conditions.

Fig. 2a shows a body 10, an imprint 11 as the optical structure, and a transparent covering layer 20 over the imprint 11. The covering layer 20 covers the imprint 11 and fills the recesses 12 thereof.

The purpose of the covering layer 20 is to protect the imprint 11 from any mechanical alteration, for example caused by manipulation of the body 10, which may subsequently alter the optical structure as a whole.

Fig. 2b shows, in addition to the items present in Fig. 2a, a pre-existing reflective layer 21.

If blanks not having any imprint of the stamp yet are employed as the bodies on which the imprint of the stamp is made, said blanks may be laminated blanks, comprising an existing reflective layer. As anticipated, the light resulting from the interaction of the radiated beam with the optical structure produces a speckle pattern on a screen. The presence of a reflective material under the imprint implies that the screen which has to sense the speckle pattern has to be positioned facing the surface bearing the imprint: as a consequence, both the laser for irradiating the optical structure and the screen for sensing the speckle pattern will be positioned on the same side of the body.

Fig. 2c shows, in addition to the items present in Fig. 2a, reflective layer 22 and its surface 23 facing away from the imprint 11 which substantially follows the imprint 11.

If the body 10 does not comprise a previously applied reflective layer 21, it may be useful to apply a layer 22 of reflective material over the first imprint 11. In this case the applied reflective layer 22 has the same implications and advantages as said previously applied reflective layer 21.

However, the presence of a reflective layer anywhere is not mandatory, and if there is no reflective layer, the screen for sensing the speckle pattern is preferably positioned on a side of the body other than the one from which the optical structure is irradiated, provided that the body is substantially transparent.

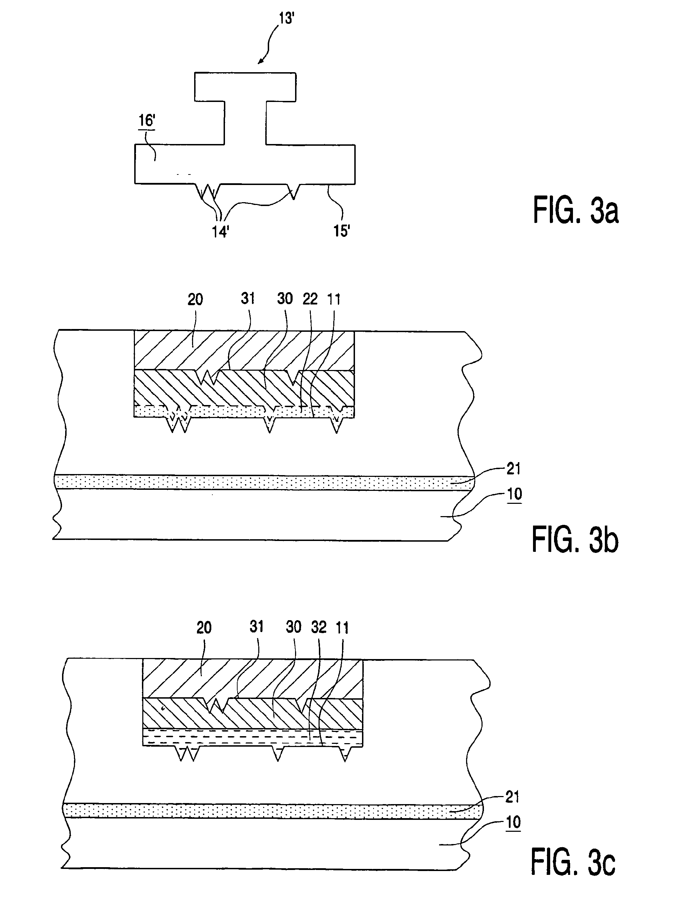

Fig. 3 shows an additional stamp and cross-sections of a body bearing a dual-layer optical structure, across the optical structure, in different conditions. Fig. 3a shows the additional stamp 13', and in particular particles 14' attached to a surface 15' of an additional auxiliary body 16'.

Fig. 3b shows a body 10, an optional pre-existing reflective layer 21, a first imprint 11, an optionally applied reflective layer 22, a layer of another imprintable material 30, an additional imprint 31 made on the layer of the other imprintable material 30, and a covering layer 20 over the additional imprint 31. The covering layer 20 covers the additional imprint 31 and fills the recesses thereof.

The purpose of the covering layer 20 is to protect the uppermost imprint from any mechanical alteration, for example caused by manipulation of the body 10, which may subsequently alter the optical structure as a whole.

If no interposition material is present between the first imprint 11 and the layer of the other imprintable material 30, it is desirable to use materials with different refractive indexes as the imprintable material and the other imprintable material 30, in order to make sure that the interface between the two adequately contributes to the interaction with light when irradiated. The presence of a reflective layer 22 between the first imprint I and the layer of other imprintable material 30 renders it possible to use the same material for the imprintable material and for the other imprintable material 30.

The additional imprint 31 may be obtained with an additional stamp 13' as well as with the first stamp 13. The purpose of making an additional imprint 31 is to obtain a dual-layer optical structure, more complex than an optical structure with a single imprint, and thus even more difficult to clone. To this end, preferably the additional imprint 31 is substantially superimposed on the first imprint 11, but it may alternatively be partly superimposed or not superimposed at all. Furthermore, if the additional imprint 31 is substantially superimposed on the first imprint 11 and that additional imprint 31 is made with the same stamp 13, the stamp 13 is preferably rotated through a chosen angle with respect to the first time it was used.

In order to obtain even more complex optical structures, it is possible to produce even further imprints on even further layers, thereby obtaining multi-layer optical structures. Moreover, it is possible to produce some of the even further imprints with even further stamps, and some of the even further imprints with stamps already used, thereby combining the two techniques described to produce additional imprints.

Fig. 3c shows, an interposition layer 32 in addition to the items present in Fig. 3a.

Also in this case, the presence of an interposition layer 32 renders it possible to use the same material for the imprintable material and for the other imprintable material 30.

The presence of an interposition layer 32 and the presence of an applied reflective layer 22 are not mutually exclusive, but may also be combined.

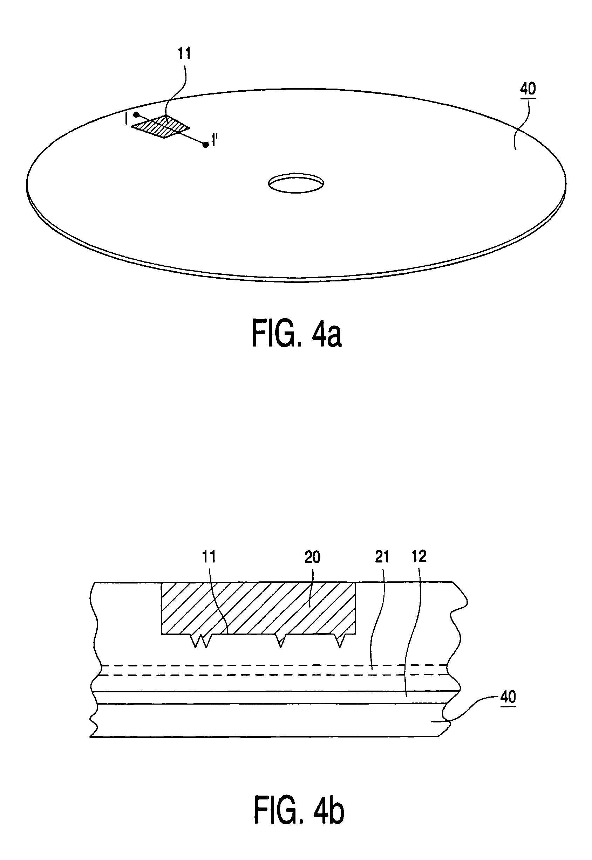

Fig. 4 shows an optical disk bearing an optical structure in perspective and in cross-section.

Fig. 4a shows the optical disk 40, and in particular an imprint 11 present as an optical structure, on a surface portion thereof.

Fig. 4b shows a portion of a cross-section of the optical disk 40 shown in Fig. 4a in a sectional view taken across the imprint 11. It is possible to see an information layer 42, an optional existing reflective layer 21, the imprint 11, and a covering layer 20. In this case, the body 10 bearing the optical structure is the actual information carrier with which the optical structure is associated, and the information carrier is an optical disk 40. The optical structure may be present in the substrate of the disk and can be observed from one side of the disk.

The optical structure may be superimposed on the information layer or be present in a portion of the disk where there is no information layer such as, for example, at the inner side of the disk. However, other alternatives are possible for the body bearing the optical structure: for example the case of the disk, if the disk is contained in a case, or the cartridge of the disk, if the disk is permanently incorporated in a cartridge, or a separate body accompanying the disk such as, example, a card.

In the above situation, in which the bodies bearing the optical structures are the information carriers themselves and the information carriers are optical disks, and in particular if the optical disks are pre-recorded optical disks carrying the same user information, for example a given music album or a given film, the production of the plurality of disks may comprise the following steps: after the stamp or the stamps have been obtained, an optical structure is produced; then the characteristic information indicated by the optical structure is identified; then the user information is encoded in accordance with the identified characteristic information; and finally the plurality of disks is produced, the disks carrying the encoded user information and bearing the optical structures, the optical structures being substantially equal to the first one, since they are produced with the same stamp or stamps.

A player for a disk of the type shown in Figure 4 will consequently be adapted to identify the characteristic information from the optical structure and to use said characteristic information to access the user information present on the disk. Furthermore, a disk of the type shown in Figure 4 does not need to be a pre-recorded disk, nor to actually contain user information, but it may also be a disk of a recordable type. A recorder for such a disk will consequently be adapted to identify the characteristic information from the associated optical structure and to use said characteristic information to encode the user information to be recorded accordingly, and to record the encoded user-information onto the disk.

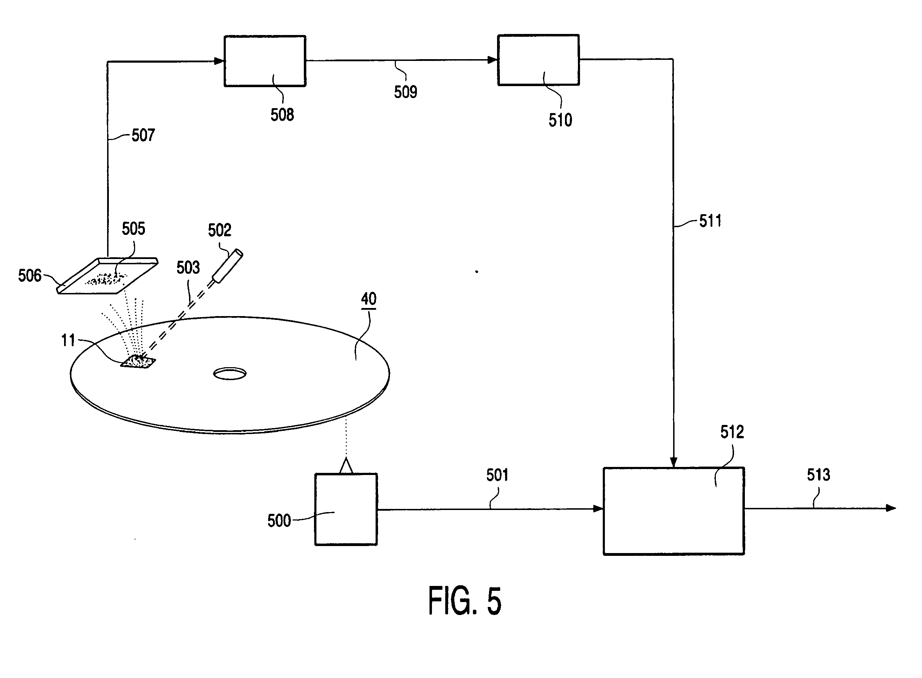

By way of background information, Fig. 5 shows a system for access control of user information contained in an optical disk, based on an optical structure indicative of characteristic information, for the general understanding of how such a system operates.

The Figure shows a laser 502, a coherent beam of light 503 produced by the laser 502, an optical disk 40, an imprint 11 serving as an optical structure borne by the optical disk 40, a screen 506, a speckle pattern 505 produced on the screen 506, a sensed speckle pattern 507, a digital filter 508, a filtered speckle pattern 509, a mathematical OWF 510, a characteristic information 511, reading means 500, encoded user information 501, an access control block 512, and decoded user information.

The laser 502 irradiates the imprint 11, i.e. the optical structure borne by an optical disk 40, with a coherent beam of light 503. The light resulting from the interaction of the radiated beam 503 with the optical structure produces the speckle pattern 505 on the screen 506.

The observed speckle pattern depends on the parameters defining the coherent beam of light such as, for example, wavelength and phase, and on the internal microstructure ' of the optical structure, i.e. on the shape of the imprint or imprints. Parameters such as, for example, the wavelength of the beam may be variable: preferably, the wavelength will vary around the size range of the recesses present in the imprint, for example 100 nm- 1 µ m. The position and/or orientation of the laser may also be variable within certain ranges, if mechanical means supporting the laser provide this possibility.

The speckle pattern 505 is sensed by the screen 506 and converted into digital information representing the sensed speckle pattern 507. A digital filter 508 is then applied to the sensed speckle pattern 507 in order to render the characteristic information insensitive to microscopic differences between imprints obtained with the same stamp, caused, for example, by the production process or by environmental alterations, or by the presence of fingerprints, while maintaining a sufficient sensitivity to detect counterfeited optical structures. The applied filter may be, for example, a two-dimensional Gabor transform. A further, mathematical, OWF 510 is applied to the filtered speckle pattern 509 to obtain the characteristic information 511. The used mathematical OWF 510 may be, for example, a simple hashing function compressing the filtered speckle pattern 509 to a relatively short string of bits.

Reading means 500 yield the encoded user information 501 present on the optical disk 40, the access control block 512 can decode the encoded user information 501, if the correct characteristic information 511 is provided, and finally the decoded user information 513 is made available.

The characteristic information 511 may consist, for example, of an encryption/decryption key: consequently the encoded user information is user information encrypted in accordance that key, and the access control block uses the key to decrypt the user-information. As an alternative, the user information may be encapsulated in a software object requiring an access key to be accessed, the characteristic information 511 may consist of the required access key, and the access control block may consequently use the access key to access the software object. Preferably, the used access control will comprise both of the above techniques, and the characteristic information 511 will be structured accordingly, the characteristic information 511 being any information necessary for accessing the user information. The characteristic information 511 may be derived not only from a single irradiation of the optical structure, but also from several irradiation steps carried out with different values of the parameters controlling the beam.

Although the invention has been elucidated with reference to the embodiments described above, it will be evident that other embodiments may be alternatively used to achieve the same object. The scope of the invention is therefore not limited to the embodiments described above, but may also be applied to a stamp having a more complex relief structure than the one simply obtained by attaching particles to a surface thereof.

It should further be noted that the term "comprises/comprising" when used in this specification, including the claims, is taken to specify the presence of stated features, integers, steps or components, but does not exclude the presence or addition of one or more other features, integers, steps, components or groups thereof. It should also be noted that the word "a" or "an" preceding an element in a claim does not exclude the presence of a plurality of such elements. Moreover, any reference signs do not limit the scope of the claims; the invention may be implemented by means of both hardware and software, and several "means" may be represented by the same item of hardware. Furthermore, the invention resides in each and every novel feature or combination of features.

The invention can be summarized as follows: in the described method of producing a plurality of bodies bearing equal imprints of a stamp as optical structures, a stamp 13 is initially produced, by attaching particles 14 to a surface 15 of an auxiliary body 16; then, the stamp 13 is used to produce an imprint 11 on a plurality of bodies 10. Optical structures can be irradiated, producing on a screen a speckle pattern indicative of a key. It is substantially impossible to clone a given optical structure with current technological means. Optical structures represent physical One-Way Functions, easy to compute in the forward sense but unfeasible to reverse. Thus, they can be used to build an access/copy protection system for user information contained in an information carrier associated with the body 10. The reproducibility of the optical structures makes this method suitable for optical disks.

## Claims

1. A method of producing a substantially identical optical structure on a plurality of bodies, a body being an information carrier for containing user information or an item accompanying an information carrier for containing user information, the optical structure being indicative of characteristic information, which can be derived from said optical structure for providing or restricting access to the user information, **characterized by** the steps of:
- producing a stamp (13) by attaching particles (14) to a surface (15) of the stamp (13); and
- using the stamp (13) to imprint said surface (15) on an imprintable material, thereby producing an imprint (11) of the stamp (13) in at least a surface portion of the body, the imprint (11) being the optical structure having a microstructure, that is different from microstructures produced by use of other stamps.

2. A method as claimed in claim 1, **characterized by** the step of applying to the imprint (11) of each body (10) a layer of reflecting material (22) such that the surface (23) of the reflective material (22) facing away from the imprint (11) substantially follows the imprint (11).

3. A method as claimed in claim 1 or 2, **characterized by** the steps of:
- applying over the imprint (11) of the each body (10) a layer of another, substantially transparent, imprintable material (30);
- using the stamp (13) an additional time to imprint the layer of the other imprintable material (30), thereby making an additional imprint(31) on the each body (10).

4. A method as claimed in claim 1 or 2, **characterized by** the steps of :
- producing an additional stamp (13') by attaching particles (14') to a surface (15') of an additional auxiliary body (16');
- applying a layer of an other, substantially transparent, imprintable material (30) over the imprint (11) of the each body (10);
- using the additional stamp (13') to imprint the layer of the other imprintable material (30), thereby making an additional imprint (31) on the each body (10).

5. A method as claimed in claim 3 or 4, **characterized in that** the imprintable material used has a first refractive index, and the other imprintable material (30) has a second refractive index, the second refractive index being different from the first refractive index.

6. A method as claimed in claim 3 or 4, **characterized by** the step of interposing a substantially transparent separation layer (32) between the imprint (11) and the layer of the other imprintable material (30) of the each body (10).

7. A method as claimed in claim 6, **characterized in that** the imprintable material used has a first refractive index, and the separation layer (32) has a third refractive index, the third refractive index being different from the first refractive index.

8. A method as claimed in claim 1, **characterized by** the step of applying a substantially transparent covering layer (20) over the imprint (11) of the each body (10).

9. A method as claimed in claim 1, **characterized in that** the each body (10) is a laminated body comprising a reflective layer (21).

10. A method as claimed in claim 1, **characterized in that** the each body (10) is integral with the respective information carrier (40).

11. A method as claimed in claim 1 or 4, **characterized in that** particles of diamond are used as the particles (14).

12. A method as claimed in claim 1 or 4, **characterized in that** particles having a size ranging between 100 nm and 1µm are used as the particles (14).

## Patentansprüche

1. Verfahren zur Herstellung einer im Wesentlichen identischen Struktur auf mehreren Körpern, wobei ein Körper ein Informationsträger zur Aufnahme von Benutzerinformationen oder ein einen Informationsträger zur Aufnahme von Benutzerinformationen begleitendes Element ist, wobei die optische Struktur für charakteristische Informationen, die von der optischen Struktur abgeleitet werden können, um Zugriff zu den Benutzerinformationen zu ermöglichen oder einzuschränken, beispielhaft ist, wobei das Verfahren durch die folgenden Schritte **gekennzeichnet** ist:
- Erzeugen eines Stempels (13) durch Anbringen von Teilchen (14) an einer Oberfläche (15) des Stempels (13) sowie
- Verwenden des Stempels (13), um die Oberfläche (15) auf einem bedruckbaren Material zu bedrucken, wodurch ein Abdruck (11) des Stempels (13) in zumindest einem Oberflächenteil des Körpers erzeugt wird, wobei der Abdruck (11) die optische Struktur mit einer Mikrostruktur, die sich von der durch Verwendung anderer Stempel erzeugten Mikrostruktur unterscheidet, darstellt.

2. Verfahren nach Anspruch 1, welches durch den Schritt des Aufbringens einer Schicht aus reflektierendem Material (22) auf den Abdruck (11) jedes Körpers (10) in einer Weise, dass die von dem Abdruck (11) abgewandte Oberfläche (23) des reflektiven Materials (22) im Wesentlichen dem Abdruck (11) folgt, **gekennzeichnet** ist.

3. Verfahren nach Anspruch 1 oder 2, welches durch die folgenden Schritte **gekennzeichnet** ist:
- Aufbringen einer Schicht aus einem weiteren, im Wesentlichen lichtdurchlässigen, bedruckbaren Material (30) über dem Abdruck (11) jedes Körpers (10),
- Verwenden des Stempels (13) um ein weiteres Mal, um die Schicht aus dem weiteren bedruckbaren Material (30) zu bedrucken, wodurch ein zusätzlicher Abdruck (31) auf jedem Körper (10) vorgesehen wird.

4. Verfahren nach Anspruch 1 oder 2, welches durch die folgenden Schritte **gekennzeichnet** ist:
- Erzeugen eines zusätzlichen Stempels (13') durch Anbringen von Teilchen (14') an einer Oberfläche (15') eines weiteren, zusätzlichen Körpers (16'),
- Aufbringen einer Schicht aus einem weiteren, im Wesentlichen lichtdurchlässigen, bedruckbaren Material (30) über dem Abdruck (11) jedes Köpers (10),
- Verwenden des zusätzlichen Stempels (13'), um die Schicht aus dem weiteren, bedruckbaren Material (30) zu bedrucken, wodurch ein zusätzlicher Abdruck (31) auf jedem Körper (10) vorgesehen wird.

5. Verfahren nach Anspruch 3 oder 4, **dadurch gekennzeichnet, dass** das verwendete, bedruckbare Material einen ersten Brechungsindex und das weitere bedruckbare Material (30) einen zweiten Brechungsindex aufweist, wobei sich der zweite Brechungsindex von dem ersten Brechungsindex unterscheidet.

6. Verfahren nach Anspruch 3 oder 4, welches durch den Schritt des Zwischenschaltens einer im Wesentlichen lichtdurchlässigen Trennschicht (32) zwischen dem Abdruck (11) und der Schicht aus dem weiteren bedruckbaren Material (30) jedes Körpers (10) **gekennzeichnet** ist.

7. Verfahren nach Anspruch 6, **dadurch gekennzeichnet, dass** das verwendete, bedruckbare Material einen ersten Brechungsindex und die Trennschicht (32) einen dritten Brechungsindex aufweist, wobei sich der dritte Brechungsindex von dem ersten Brechungsindex unterscheidet.

8. Verfahren nach Anspruch 1, welches durch den Schritt des Aufbringens einer im Wesentlichen lichtdurchlässigen Deckschicht (20) über dem Abdruck (11) jedes Körpers (10) **gekennzeichnet** ist.

9. Verfahren nach Anspruch 1, **dadurch gekennzeichnet, dass** jeder Körper (10) ein laminierter Körper mit einer reflektiven Schicht (21) ist.

10. Verfahren nach Anspruch 1, **dadurch gekennzeichnet, dass** jeder Körper (10) mit dem jeweiligen Informationsträger (40) integriert ist.

11. Verfahren nach Anspruch 1 oder 4, **dadurch gekennzeichnet, dass** als Teilchen (14) Diamantteilchen verwendet werden.

12. Verfahren nach Anspruch 1 oder 4, **dadurch gekennzeichnet, dass** Teilchen mit einer Größe in dem Bereich zwischen 100 nm und 1 µm als Teilchen (14) verwendet werden.

## Revendications

1. Procédé de production d'une structure optique sensiblement identique sur une pluralité de corps, un corps étant un support d'information pour contenir de l'information d'utilisateur ou un article accompagnant un support d'information pour contenir de l'information d'utilisateur, la structure optique étant indicative de l'information caractéristique qui peut être dérivée de ladite structure optique pour fournir ou pour limiter l'accès à l'information d'utilisateur, **caractérisé par** les étapes suivantes consistant à:
- produire un timbre en attachant des particules (14) à une surface (15) du timbre (13); et
- utiliser le timbre (13) pour imprimer ladite surface (15) sur un matériau susceptible d'impression, produisant de ce fait une empreinte (11) du timbre (13) dans au moins une partie de la surface du corps, l'empreinte (11) étant la structure optique ayant une microstructure qui est différente des microstructures étant produites au moyen d'autres timbres.

2. Procédé selon la revendication 1, **caractérisé par** l'étape consistant à appliquer à l'empreinte (11) de chaque corps (10) une couche constituée de matériau réfléchissant (22) de telle façon que la surface (23) du matériau réfléchissant (22) qui se situe dans un sens s'éloignant de l'empreinte (11) suive sensiblement l'empreinte (11).

3. Procédé selon la revendication 1 ou 2, **caractérisé par** les étapes consistant à:
- appliquer par-dessus l'empreinte (11) de chaque corps (10) une couche constituée d'un autre matériau sensiblement transparent et susceptible d'impression (30);
- utiliser le timbre (13) pendant un délai additionnel pour imprimer la couche constituée de l'autre matériau susceptible d'impression (30), de ce fait fabriquant une empreinte additionnelle (31) sur chaque corps (10).

4. Procédé selon la revendication 1 ou 2, **caractérisé par** les étapes consistant à:
- produire un timbre additionnel (13') en attachant des particules (14') à une surface (15') d'un corps auxiliaire additionnel (16');
- appliquer une couche constituée d'un autre matériau sensiblement transparent et susceptible d'impression (30) par-dessus l'empreinte (11) de chaque corps (10);
- utiliser le timbre additionnel (13') pour imprimer la couche constituée de l'autre matériau susceptible d'impression (30), de ce fait fabriquant une empreinte additionnelle (31) sur chaque corps (10).

5. Procédé selon la revendication 3 ou 4, **caractérisé en ce que** le matériau susceptible d'impression qui est utilisé présente un premier indice de réfraction en **en ce que** l'autre matériau susceptible d'impression (30) présente un deuxième indice de réfraction, le deuxième indice de réfraction étant différent du premier indice de réfraction.

6. Procédé selon la revendication 3 ou 4, **caractérisé par** l'étape consistant à interposer une couche de séparation sensiblement transparente (32) entre l'empreinte (11) et la couche constituée de l'autre matériau susceptible d'impression (30) de chaque corps (10).

7. Procédé selon la revendication 6, **caractérisé en ce que** le matériau susceptible d'impression qui est utilisé présente un premier indice de réfraction et **en ce que** la couche de séparation (32) présente un troisième indice de réfraction, le troisième indice de réfraction étant différent du premier indice de réfraction.

8. Procédé selon la revendication 1, **caractérisé par** l'étape consistant à appliquer une couche de recouvrement sensiblement transparente (20) par-dessus l'empreinte (11) de chaque corps (10).

9. Procédé selon la revendication 1, **caractérisé en ce que** chaque corps (10) est un corps stratifié comprenant une couche réfléchissante (21).

10. Procédé selon la revendication 1, **caractérisé en ce que** chaque corps (10) fait corps avec le support d'information respectif (40).

11. Procédé selon la revendication 1 ou 4, **caractérisé en ce que** les particules de diamant sont utilisées en tant que particules (14).

12. Procédé selon la revendication 1 ou 4, **caractérisé en ce que** les particules ayant une taille dans la gamme comprise entre 100 nm et 1 µm sont utilisées en tant que particules (14).
